(19) **Europäisches Patentamt / European Patent Office / Office européen des brevets**

(11) **EP 3 941 045 A1**

(12) **DEMANDE DE BREVET EUROPEEN**

(43) Date de publication:
**19.01.2022 Bulletin 2022/03**

(21) Numéro de dépôt: **21194860.9**

(22) Date de dépôt: **18.05.2018**

(51) Classification Internationale des Brevets (IPC):
*H04N 19/105* (2014.01)   *H04N 19/11* (2014.01)
*H04N 19/176* (2014.01)   *H04N 19/147* (2014.01)
*H04N 19/46* (2014.01)   *H04N 19/593* (2014.01)
*H04N 19/94* (2014.01)

(52) Classification Coopérative des Brevets (CPC):
**H04N 19/105; H04N 19/147; H04N 19/176; H04N 19/46; H04N 19/593; H04N 19/94;** H04N 19/11

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.05.2017 FR 1754688**

(62) Numéro(s) de document de la (des) demande(s) initiale(s) en application de l'article 76 CBE:
**18736976.4 / 3 632 103**

(71) Demandeur: **ORANGE**
**92130 Issy-les-Moulineaux (FR)**

(72) Inventeurs:
• **HENRY, Félix**
  **92326 Chatillon Cedex (FR)**
• **ABDOLI, Mohsen**
  **92326 Chatillon Cedex (FR)**

(74) Mandataire: **Vidon Brevets & Stratégie**
**16B, rue de Jouanet**
**BP 90333**
**35703 Rennes Cedex 7 (FR)**

Remarques:
Cette demande a été déposée le 03.09.2021 comme demande divisionnaire de la demande mentionnée sous le code INID 62.

(54) **PROCÉDÉS ET DISPOSITIFS DE CODAGE ET DE DÉCODAGE D'UN FLUX DE DONNÉES REPRÉSENTATIF D'AU MOINS UNE IMAGE**

(57) L'invention concerne un procédé et un dispositif de codage et un procédé et un dispositif de décodage d'un signal comportant des données codées représentatives d'au moins une image découpée en blocs, le signal comprenant une information représentative d'un bloc, dit bloc de correction. Pour au moins un bloc courant de l'image codé dans le signal, au moins un premier pixel du bloc courant est codé à partir d'une valeur de prédiction obtenue (E20) pour ledit premier pixel à partir d'au moins un pixel d'un bloc précédemment reconstruit de l'image, ladite prédiction étant corrigée (E21) à l'aide d'au moins une valeur d'un pixel dudit bloc de correction, et au moins un pixel courant du bloc courant est codé à partir d'une valeur de prédiction obtenue (E20) pour ledit pixel courant à partir d'au moins une valeur de prédiction précédemment corrigée pour au moins un autre pixel du bloc courant, ladite prédiction étant corrigée (E21) à l'aide d'au moins une valeur d'un pixel dudit bloc de correction, délivrant un bloc prédicteur pour le bloc courant. Le signal comprend également au moins une information ($Res^q_b$) représentative d'un bloc de résidu calculé à partir du bloc courant et du bloc prédicteur.

FIG. 2

EP 3 941 045 A1

**Description**

1. Domaine de l'invention

Le domaine de l'invention est celui du codage et du décodage d'images ou de séquences d'images, et notamment de flux vidéo.

Plus précisément, l'invention concerne la compression d'images ou de séquences d'images utilisant une représentation par blocs des images.

L'invention peut notamment s'appliquer au codage image ou vidéo mis en œuvre dans les codeurs actuels ou à venir (JPEG, MPEG, H.264, HEVC, etc et leurs amendements), et au décodage correspondant.

2. Art Antérieur

Les images et séquences d'images numériques occupent beaucoup d'espace en termes de mémoire, ce qui nécessite, lorsque l'on transmet ces images, de les compresser afin d'éviter les problèmes d'encombrement sur le réseau utilisé pour cette transmission. En effet, le débit utilisable sur ce réseau est généralement limité.

On connaît déjà de nombreuses techniques de compression de données vidéo. Parmi celles-ci, le standard de compression HEVC ("High Efficiency Video Coding, Coding Tools and Spécification", Matthias Wien, Signais and Communication Technology, 2015) propose de mettre en œuvre une prédiction de pixels d'une image courante par rapport à d'autres pixels appartenant à la même image (prédiction intra) ou à une image précédente ou suivante (prédiction inter).

Plus précisément, la prédiction intra exploite les redondances spatiales au sein d'une image. Pour ce faire, les images sont découpées en blocs de pixels. Les blocs de pixels sont alors prédits à l'aide d'informations déjà reconstruites, correspondant aux blocs précédemment codés/décodés dans l'image courante selon l'ordre de parcours des blocs dans l'image.

Par ailleurs, de manière classique, le codage d'un bloc courant est réalisé à l'aide d'une prédiction du bloc courant, dit bloc prédicteur, et d'un résidu de prédiction ou « bloc résiduel », correspondant à une différence entre le bloc courant et le bloc prédicteur. Le bloc résiduel obtenu est alors transformé, par exemple en utilisant une transformée de type DCT (transformée en cosinus discrète). Les coefficients du bloc résiduel transformé sont ensuite quantifiés, puis codés par un codage entropique et transmis au décodeur, qui peut reconstruire le bloc courant en ajoutant ce bloc résiduel au bloc prédicteur.

Le décodage est fait image par image, et pour chaque image, bloc par bloc. Pour chaque bloc, les éléments correspondants du flux sont lus. La quantification inverse et la transformation inverse des coefficients du bloc résiduel sont effectuées. Puis, la prédiction du bloc est calculée pour obtenir le bloc prédicteur, et le bloc courant est reconstruit en ajoutant la prédiction (i.e. le bloc prédicteur) au bloc résiduel décodé.

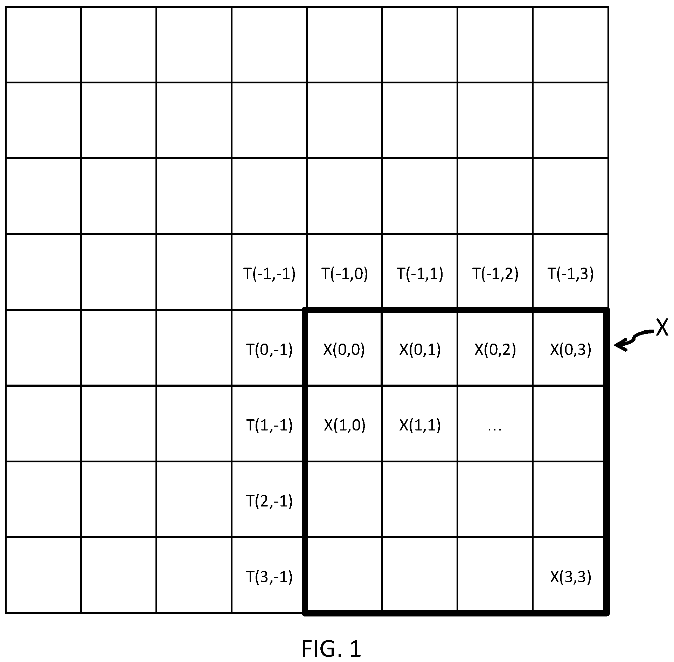

Classiquement, la prédiction intra d'un bloc courant est faite en utilisant des pixels de référence de blocs précédemment reconstruits dans l'image. Une telle situation est illustrée en figure 1, sur laquelle les pixels de référence utilisés pour prédire les pixels $(X(i,j)_{i=0,1,2,3 \text{ et } j=0,1,2,3})$ d'un bloc courant $X$ correspondent en général aux pixels situés sur la ligne juste au dessus du bloc courant (pixels identifiés par $T(-1, i)_{i=-1,0,1,2,3}$) et les pixels situés sur la colonne à gauche du bloc courant (pixels identifiés par $T(i, -1)_{i=-1,0,1,2,3}$).

Par exemple, le standard HEVC définit 35 modes de prédiction intra utilisant de tels pixels de référence, ces modes de prédiction différant entre eux de par la manière dont ces pixels de référence sont utilisés pour construire un bloc prédicteur du bloc courant.

Il apparaît que selon une telle technique de prédiction intra, les pixels situés sur la première ligne et la première colonne du bloc prédicteur sont très bien prédits car ils sont immédiatement adjacents aux pixels de référence. En effet, plus des pixels sont proches spatialement, plus l'information qu'ils contiennent est corrélée.

En revanche, les pixels du bloc prédicteur qui sont situés en bas à droite, i.e. loin des pixels de référence, par exemple le pixel X(3,3) illustré en figure 1, ne sont pas correctement prédits. De tels pixels fournissent alors un résidu de prédiction avec une énergie élevée et donc plus de débit est nécessaire pour les coder.

Il existe donc un besoin pour une nouvelle technique de construction de blocs prédicteurs pour prédire un bloc courant, permettant d'améliorer la compression des données image ou vidéo.

3. Exposé de l'invention

L'invention vient améliorer l'état de la technique. Elle concerne un procédé de décodage d'un flux de données codées représentatif d'au moins une image découpée en blocs. Le procédé de décodage comprend les étapes suivantes, pour au moins un bloc courant de l'image:

- décodage à partir du flux de données codées, d'au moins une information représentative d'un bloc, dit bloc de correction, ledit bloc de correction comprenant des données de résidu, dites valeurs de correction, et d'un bloc de résidu, ledit bloc de résidu comprenant des données de résidu de prédiction,
- détermination du bloc de correction à partir de l'information décodée représentative dudit bloc de correction,
- détermination, au moins à partir dudit bloc de correction, d'un bloc prédicteur du bloc courant comprenant:

  - pour au moins un premier pixel du bloc courant:

    - obtention d'une valeur de prédiction dudit premier pixel à partir d'au moins un pixel d'un bloc précédemment reconstruit de l'image,
    - correction de la valeur de prédiction obtenue pour ledit premier pixel en lui ajoutant au moins une valeur de correction d'un pixel du bloc de correction,

  - pour au moins un pixel courant du bloc courant, distinct du premier pixel:

    - obtention d'une valeur de prédiction précédemment corrigée pour au moins un autre pixel du bloc courant,
    - correction de la valeur de prédiction obtenue pour ledit pixel courant en lui ajoutant au moins une valeur de correction d'un pixel du bloc de correction,

- reconstruction dudit bloc courant à partir du bloc prédicteur et des données de résidu de prédiction du bloc de résidu décodé.

Corrélativement, l'invention concerne un procédé de codage d'au moins une image sous la forme d'un flux de données codées, ladite image étant découpée en blocs, et comprenant les étapes suivantes, pour au moins un bloc courant de l'image à coder:

- détermination d'un bloc prédicteur du bloc courant comprenant:

  - pour au moins un premier pixel du bloc courant:

    - obtention d'une valeur de prédiction dudit premier pixel à partir d'au moins un pixel d'un bloc précédemment reconstruit de l'image,
    - correction de la valeur de prédiction obtenue pour ledit premier pixel en lui ajoutant au moins une valeur d'un pixel d'un bloc, dit bloc de correction, ledit bloc de correction comprenant des données de résidu, dites valeurs de correction,

  - pour au moins un pixel courant du bloc courant, distinct du premier pixel:

    - obtention d'une valeur de prédiction dudit pixel courant à partir d'une valeur de prédiction précédemment corrigée pour au moins un autre pixel du bloc courant,

  - correction de la valeur de prédiction obtenue pour ledit pixel courant en lui ajoutant au moins une valeur de correction d'un pixel dudit bloc de correction,

- codage dans le flux de données d'au moins une information représentative dudit bloc de correction,
- calcul de données de résidu de prédiction d'un bloc de résidu à partir dudit bloc courant et dudit bloc prédicteur déterminé,- codage dans le flux de données des données de résidu de prédiction dudit bloc de résidu.

Selon l'invention, la prédiction d'un pixel courant d'un bloc courant est ainsi améliorée. En effet, il est ainsi possible de prédire un pixel courant du bloc courant par un pixel du bloc courant qui a précédemment été corrigé. Notamment, pour un pixel courant qui est spatialement éloigné des pixels de référence du bloc courant, i.e les pixels de référence correspondant aux pixels situés juste au-dessus du bloc courant et à gauche du bloc courant, il est ainsi possible de prédire un tel pixel courant par des pixels du bloc courant qui sont plus proches de ce pixel courant. La prédiction des pixels étant améliorée, le résidu de prédiction entre le bloc courant et le bloc prédicteur est moindre et le coût de codage du bloc courant est réduit.

Selon l'invention, un résidu de codage pour le bloc courant est transmis dans le flux de données et ajouté au bloc prédicteur pour reconstruire le bloc courant, permettant ainsi d'améliorer les performances en compression.

Selon un autre mode particulier de réalisation de l'invention, le bloc de correction comprend des données de résidu prédéterminées.

Selon un autre mode particulier de réalisation de l'invention, le bloc de correction appartient à un ensemble de blocs de données prédéterminés, ladite au moins une information représentative dudit bloc de correction permettant d'identifier ledit bloc de correction parmi les blocs de l'ensemble. Selon ce mode particulier de réalisation de l'invention, un dictionnaire de blocs de données de résidu est disponible au niveau du codeur et du décodeur. Pour un bloc courant à coder ou décoder, le bloc de correction est sélectionné parmi les blocs du dictionnaire. Par exemple, le bloc du dictionnaire fournissant le meilleur compromis débit/distorsion pour coder le bloc courant est sélectionné comme bloc de correction pour le bloc courant.

Selon un autre mode particulier de réalisation de l'invention, la valeur de prédiction du pixel courant est obtenue à partir d'au moins un pixel précédemment corrigé du bloc courant en fonction d'une fonction de prédiction locale appliquée sur le pixel situé au-dessus du pixel courant, sur le pixel situé à gauche du pixel courant et sur le pixel situé en haut à gauche du pixel courant. Selon ce mode particulier de réalisation de l'invention, un pixel courant est prédit à l'aide d'un voisinage causal et local à ce pixel. La corrélation entre le pixel courant et les pixels de référence utilisés pour la prédiction du pixel courant est ainsi plus élevée qu'avec les méthodes de prédiction intra classiques.

Selon un autre mode particulier de réalisation de l'invention, une information représentative de la fonction de prédiction locale est codée dans ou décodée depuis le flux de données codées. Selon ce mode particulier de réalisation, différentes fonctions de prédiction locales peuvent être utilisées pour prédire les pixels d'un bloc courant. Il est ainsi possible de sélectionner et signaler au décodeur la fonction de prédiction locale la plus efficace pour prédire les pixels d'un bloc courant.

Selon un autre mode particulier de réalisation de l'invention, le flux de données codées comprend, pour le bloc courant, une information indiquant si le bloc courant est codé selon un mode de prédiction utilisant uniquement des pixels appartenant à des blocs précédemment reconstruits de l'image ou si le bloc courant est codé selon un mode de prédiction utilisant au moins un pixel précédemment corrigé du bloc courant. Selon ce mode particulier de réalisation, le flux de données comprend une information indiquant si le bloc courant est codé par exemple selon un mode de prédiction intra directionnel tel que connu des standards de compression existants ou selon le nouveau mode de prédiction intra de l'un quelconque des modes particuliers de réalisation cités ci-dessus. Ainsi, il est possible pour chaque bloc de l'image de choisir le meilleur mode de prédiction intra en termes de débit/distorsion.

L'invention concerne également un signal comportant des données codées représentatives d'au moins une image, découpée en blocs. Un tel signal comprend, pour au moins un bloc courant de l'image, au moins une information représentative d'un bloc, dit bloc de correction, ledit bloc de correction comprenant des données de résidu, dites valeurs de correction, au moins un premier pixel du bloc courant étant codé à partir d'au moins une valeur de correction d'un pixel du bloc de correction et d'une valeur de prédiction obtenue pour ledit premier pixel à partir d'au moins un pixel d'un bloc précédemment reconstruit de l'image, et au moins un pixel courant du bloc courant étant codé à partir d'au moins une valeur de correction d'un pixel du bloc de correction et d'une valeur de prédiction obtenue pour ledit pixel courant à partir de la valeur de prédiction précédemment corrigée pour au moins autre un pixel du bloc courant, délivrant un bloc prédicteur pour le bloc courant. Le signal comprend également au moins une information représentative d'un bloc de résidu, ledit bloc de résidu comprenant des données de résidu de prédiction, calculées à partir du bloc courant et du bloc prédicteur.

Selon un mode particulier de réalisation de l'invention, le signal comprend en outre, pour le bloc courant, une information indiquant si le bloc courant est codé selon un mode de prédiction utilisant uniquement des pixels appartenant à des blocs précédemment reconstruits de l'image ou si le bloc courant est codé selon un mode de prédiction utilisant au moins un pixel précédemment corrigé du bloc courant.

L'invention concerne également un dispositif de décodage configuré pour mettre en œuvre le procédé de décodage selon l'un quelconque des modes particuliers de réalisation définis ci-dessus. Ce dispositif de décodage pourra bien sûr comporter les différentes caractéristiques relatives au procédé de décodage selon l'invention. Ainsi, les caractéristiques et avantages de ce dispositif de décodage sont les mêmes que ceux du procédé de décodage, et ne sont pas détaillés plus amplement.

Selon un mode particulier de réalisation de l'invention, un tel dispositif de décodage est compris dans un terminal.

L'invention concerne également un dispositif de codage configuré pour mettre en œuvre le procédé de codage selon l'un quelconque des modes particuliers de réalisation définis ci-dessus. Ce dispositif de codage pourra bien sûr comporter les différentes caractéristiques relatives au procédé de codage selon l'invention. Ainsi, les caractéristiques et avantages de ce dispositif de codage sont les mêmes que ceux du procédé de codage, et ne sont pas détaillés plus amplement.

Selon un mode particulier de réalisation de l'invention, un tel dispositif de codage est compris dans un terminal, ou un serveur.

Le procédé de décodage, respectivement le procédé de codage, selon l'invention peut être mis en œuvre de diverses manières, notamment sous forme câblée ou sous forme logicielle. Selon un mode particulier de réalisation de l'invention, le procédé de décodage, respectivement le procédé de codage, est mis en œuvre par un programme d'ordinateur. L'invention concerne également un programme d'ordinateur comportant des instructions pour la mise en œuvre du procédé de décodage ou du procédé de codage selon l'un quelconque des modes particuliers de réalisation décrits précédemment, lorsque ledit programme est exécuté par un processeur. Un tel programme peut utiliser n'importe quel langage de programmation. Il peut être téléchargé depuis un réseau de communication et/ou enregistré sur un support lisible par ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable. L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, les supports d'enregistrement peuvent correspondre à un circuit intégré dans lequel le programme est incorporé, le circuit étant adapté pour exécuter ou pour être utilisé dans l'exécution du procédé en question.

## 4. Liste des figures

D'autres caractéristiques et avantages de l'invention apparaîtront plus clairement à la lecture de la description suivante de plusieurs modes de réalisation particuliers, donnés à titre de simples exemples illustratifs et non limitatifs, et des dessins annexés, parmi lesquels :

- la figure 1 illustre la position des pixels de référence selon l'art antérieur pour prédire les pixels d'un bloc courant,
- la figure 2 illustre un procédé de détermination d'un bloc prédicteur selon un mode particulier de réalisation de l'invention,
- la figure 3 illustre des exemples de position des pixels de référence utilisés pour prédire des pixels d'un bloc courant selon un mode particulier de réalisation de l'invention,
- la figure 4 présente des étapes du procédé de codage selon un mode particulier de réalisation de l'invention,
- la figure 5 présente des étapes du procédé de décodage selon un mode particulier de réalisation de l'invention,
- la figure 6 présente la structure simplifiée d'un dispositif de codage adapté pour mettre en œuvre le procédé de codage selon l'un quelconque des modes particuliers de réalisation de l'invention,
- la figure 7 présente la structure simplifiée d'un dispositif de décodage adapté pour mettre en œuvre le procédé de décodage selon l'un quelconque des modes particuliers de réalisation de l'invention,
- la figure 8A illustre un exemple de signal comportant des données codées représentatives d'au moins un bloc d'une image selon un mode particulier de réalisation de l'invention,
- la figure 8B illustre un exemple de signal comportant des données codées représentatives d'au moins un bloc d'une image selon un autre mode particulier de réalisation de l'invention.

## 5. Description d'un mode de réalisation de l'invention

### 5.1 Principe général

Le principe général de l'invention vise à améliorer la prédiction des pixels d'un bloc à coder d'une image, situés loin des pixels de référence classiquement utilisés pour la prédiction d'un bloc.

Pour cela, une prédiction de ces pixels est mise en œuvre par l'utilisation de pixels du bloc courant lui-même qui ont été précédemment corrigés à l'aide d'un bloc de données résiduelles. Un tel bloc de données résiduelles est différent d'un bloc de résidu de codage connu des méthodes de codage classiques par prédiction. Selon l'invention, le bloc de données résiduelles, aussi appelé bloc de correction, comprend des données de résidu permettant de corriger la valeur des pixels du bloc courant qui servent pour prédire des pixels suivants du bloc courant. En effet, les pixels du bloc courant qui servent pour prédire des pixels suivants du bloc courant ont eux-mêmes été prédits par des pixels précédemment corrigés du bloc courant et/ou des pixels d'un bloc précédemment reconstruit de l'image, mais pour lesquels un résidu de prédiction n'a pas encore été calculé, ni codé/décodé. Selon l'invention, des pixels du bloc courant sont prédits par d'autres pixels appartenant également au bloc courant et qui n'ont pas encore été reconstruits, i.e. à l'aide d'un résidu de prédiction codé/décodé, mais qui sont corrigés à l'aide d'un bloc de correction disponible au codeur et au décodeur.

Par valeur d'un pixel, on entend ici la valeur d'une composante de l'image à coder pour le pixel. Par exemple, dans le cas d'une représentation de l'image à coder sous la forme d'une composante de luminance Y, et de deux composantes de chrominance U et V, la méthode de prédiction peut être appliquée sur chaque composante, ou seulement sur l'une d'entre elles. L'invention n'est évidemment pas limitée à la représentation YUV et s'applique de manière similaire à d'autres représentations de l'image (RGB, YCbCr, ...).

On présente tout d'abord des modes de mise en œuvre de la détermination d'un bloc prédicteur d'un bloc courant selon l'invention, puis un procédé de codage d'une séquence d'images et un procédé de décodage d'un flux de données, utilisant tout deux une telle détermination d'un bloc prédicteur d'un bloc courant de l'image, selon un mode particulier de réalisation de l'invention, ainsi que des dispositifs de codage et de décodage correspondants.

5.2 Détermination d'un bloc prédicteur d'un bloc courant selon un mode particulier de réalisation de l'invention

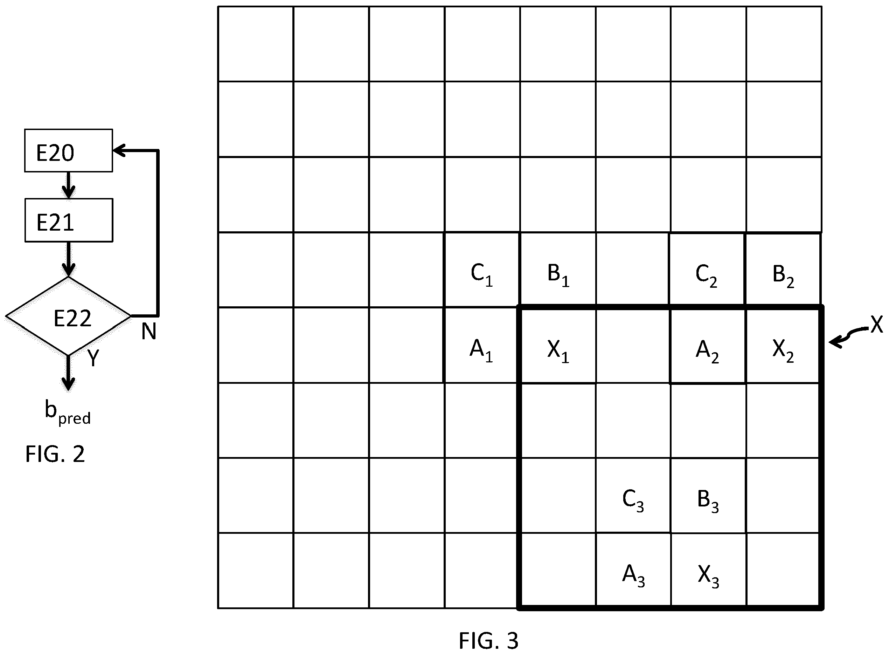

La figure 2 illustre la détermination d'un bloc prédicteur $b_{pred}$ servant à prédire un bloc courant $X$ d'une image à coder.

Pour chaque pixel $X_i$ du bloc courant $X$, illustré en figure 3 à l'aide de lignes épaisses, une valeur de prédiction du pixel Xi est déterminée lors d'une étape E20. Pour cela, une fonction de prédiction locale $H(A_i,B_i,C_i)$ est utilisée. Une telle fonction $H(A_i,B_i,C_i)$ calcule une valeur de prédiction $P_i$ d'un pixel Xi à partir de la valeur des pixels Ai, $B_i$, Ci. Selon le mode particulier de réalisation de l'invention décrit ici, les pixels Ai, Bi, Ci correspondent respectivement au pixel situé à gauche du pixel Xi, au-dessus du pixel $X_i$ et au-dessus et à gauche du pixel $X_i$.

La fonction de prédiction locale $H(A_i,B_i,C_i)$ est par exemple de la forme:

$$P_i = H(A_i, B_i, C_{i,}) = \begin{cases} min(A_i, B_i) \; si \; C_i > max\,(A_i, B_i) \\ max(A_i, B_i) \; si \; C_i < min\,(A_i, B_i) \\ A_i + B_i - C_i \; sinon \end{cases}$$

En variante, d'autres types de fonctions de prédiction locales peuvent être utilisées, par exemple $H(A_i, B_i, C_{i,}) = \frac{A_i + B_i + C_i}{3}$ .

La fonction de prédiction locale $H(A_i,B_i,C_i)$ peut être connue du codeur et du décodeur, ou bien transmise dans le flux de données codées, au niveau des données codées d'une image, ou de la séquence d'images.

En fonction de la position du pixel Xi dans le bloc courant $X$, la fonction de prédiction locale utilise des pixels $A_i$, $B_i$, $C_i$ pouvant appartenir à des blocs précédemment reconstruits de l'image et/ou appartenant au bloc courant $X$.

Par exemple, pour le pixel $X_1$ de la figure 3, la valeur de prédiction est déterminée à partir des pixels $A_1$, $B_1$ et $C_1$, i.e. uniquement à l'aide de pixels de référence appartenant à des blocs précédemment reconstruits de l'image, et plus précisément aux blocs situés au-dessus, à gauche et au-dessus à gauche du bloc courant.

Pour le pixel $X_2$ de la figure 3, la valeur de prédiction est déterminée à partir des pixels $A_2$, $B_2$ et $C_2$, i.e. à l'aide de pixels de référence appartenant à des blocs précédemment reconstruits de l'image et à l'aide d'un pixel appartenant au bloc courant.

Pour le pixel $X_3$ de la figure 3, la valeur de prédiction est déterminée à partir des pixels $A_3$, $B_3$ et $C_3$, i.e. uniquement à l'aide de pixels appartenant au bloc courant.

D'une manière générale et avec des notations en référence à la figure 1, pour un pixel $X(lin, col)$ du bloc courant X, où $lin$ représente l'indice de la ligne du pixel X par rapport au coin supérieur gauche du bloc $X$ et $col$ représente l'indice de la colonne du pixel X par rapport au coin supérieur gauche du bloc $X$, la valeur de prédiction $G(lin, col)$ est obtenue par:

$$G(lin, col) = H\big(T(0, -1), T(-1,0), T(-1, -1)\big) \; si \; lin = 0 \; et \; col = 0,$$

$$G(lin, col) = H(T(lin, -1), P_k(lin - 1, 0), T(lin - 1, -1)), si \; lin > 0 \; et \; col = 0,$$

$$G(lin, col) = H(P_k(0, col - 1), T(-1, col), T(-1, col - 1)), si \; lin = 0 \; et \; col > 0,$$

$$G(lin, col) = H(P_k(lin, col - 1), P_k(lin - 1, col), P_k(lin - 1, col - 1), si \; lin > 0 \; et \; col > 0$$

avec $T(lin, col)$ un pixel appartenant à un bloc précédemment reconstruit, $H$ la fonction de prédiction locale et $P_k(x,y)$ la valeur de prédiction d'un pixel $X(x,y)$ appartenant au bloc courant $X$ et ayant été précédemment corrigée par un bloc de correction $V_k$ décrit ci-après. A l'issue de l'étape E20, une valeur de prédiction $G(lin, col)$ est obtenue pour le pixel courant $X(lin, col)$.

Lors d'une étape E21, la valeur de prédiction $G(lin, col)$ est corrigée à l'aide d'une valeur d'un bloc de correction $V_k$ pour le pixel $X(lin, col)$. Le bloc de correction $V_k$ est un bloc de données de résidu, comprenant par exemple des valeurs entre -255 et +255 lorsque les valeurs de pixels sont représentées sur 8 bits.

Selon un mode particulier de réalisation de l'invention, le bloc de correction $V_k$ appartient à un ensemble ou dictionnaire de blocs de données de résidu prédéterminés $\{V_k\}_{k=0...N}$, N étant le nombre de blocs de l'ensemble.

Par exemple, un tel dictionnaire comprend un sous-ensemble de toutes les combinaisons possibles de valeurs de résidus, le sous-ensemble étant sélectionné par exemple par apprentissage sur un groupe d'images, et/ou transmis avec le flux de données codées.

Par exemple, il est considéré dans cet exemple que les pixels de l'image sont codés sur 8 bits, et chaque pixel d'un bloc de correction peut corriger négativement ou positivement une valeur de prédiction elle-même représentée sur 8 bits. Un tel pixel d'un bloc de correction doit alors avoir une dynamique de 9 bits. En conséquence, pour un bloc de correction de taille 8x8 pixels par exemple, le nombre de blocs possibles est de $2^{9\times64}$. Il serait alors nécessaire de coder beaucoup d'informations pour identifier le bloc de correction choisi parmi toutes les combinaisons possibles de valeurs de résidus. De plus, la recherche du meilleur bloc de correction serait très coûteuse en terme de calcul.

En pratique, des tailles de dictionnaire comprenant par exemple entre 32 à 512 blocs de correction permettent d'obtenir une compression optimale, c'est-à-dire un gain en qualité élevé pour une transmission d'information réduite. Il est cependant nécessaire de bien choisir les blocs du dictionnaire afin que de tels blocs de correction soient représentatifs des blocs réellement utiles pour effectuer une correction des pixels du bloc courant.

Selon l'exemple décrit ici, on construit le dictionnaire $\{V_k\}_{k=0...N}$ comme un sous-ensemble de blocs de correction parmi un vaste ensemble de blocs de correction comprenant tous les blocs de correction possibles, i.e. comprenant toutes les combinaisons de valeurs de résidus possibles. Selon une première variante, pour construire ce dictionnaire $\{V_k\}_{k=0...N}$, une technique classique de construction par algorithme de Linde-Buzzo-Gray (algorithme LBG) telle que décrite dans Linde, Y.; Buzo, A.; Gray, R. (1980). "An Algorithm for Vector Quantizer Design". IEEE Transactions on Communications. 28: 84. doi:10.1109/TCOM.1980.1094577 est utilisée. Cette technique consiste à utiliser une séquence d'apprentissage de blocs de pixels à corriger, et un dictionnaire initial, par exemple choisi au hasard. Cette technique itère ensuite deux étapes :

- une première étape qui consiste à déterminer, pour chaque bloc de la séquence d'apprentissage, le meilleur bloc de correction du dictionnaire au sens d'un critère prédéterminé, par exemple la distorsion générée par l'utilisation du bloc de correction lors de la prédiction des pixels du bloc courant de la séquence d'apprentissage. Les blocs d'apprentissage sont divisés en classes, chaque classe étant l'ensemble des blocs d'apprentissage associés à un bloc de correction du dictionnaire.
- pour chaque classe, un nouveau bloc de correction est déterminé de sorte que ce bloc améliore le critère prédéterminé pour ladite classe. Le bloc du dictionnaire associé à la classe est alors remplacé par ce nouveau bloc.

D'autres méthodes connues de l'homme de l'art pour construire un dictionnaire de quantification sont possibles, comme par exemple l'approche « *Pairwise Nearest neighbor », décrite dans l'ouvrage* « Vector Quantization and Signal Compression » de Allen Gersho et Robert M. Gray, The Springer International Series in Engineering and Computer Science Series Volume 159 aux édtions Springer US.

De préférence, le bloc de correction $V_k$ a une taille identique au bloc courant.

Selon un mode particulier de réalisation de l'invention, un même bloc de correction est utilisé pour tous les pixels du bloc courant.

Lors de l'étape E21, la valeur du bloc de correction $V_k(lin, col)$ est ajoutée à la valeur de prédiction $G(lin, col)$ obtenue pour le pixel $X(lin, col)$, pour obtenir la valeur de prédiction corrigée $P_k(lin, col)$ du pixel $X(lin, col)$: $P_k(lin, col)$ = $G(lin, col) + V_k(lin, col)$.

Lors d'une étape E22, il est vérifié si tous les pixels du bloc courant ont été prédits. Si c'est le cas (Y sur la figure 2), un bloc prédicteur $b_{pred}$ associé au bloc de correction $V_k$ comprenant pour chaque pixel $X(lin, col)$ une valeur de prédiction corrigée $P_k(lin, col)$ est disponible pour coder ou reconstruire le bloc courant. Sinon (N sur la figure 2), on passe à la prédiction du pixel suivant du bloc courant en itérant les étapes E20 et E21 pour le pixel suivant.

5.3 Procédé de codage

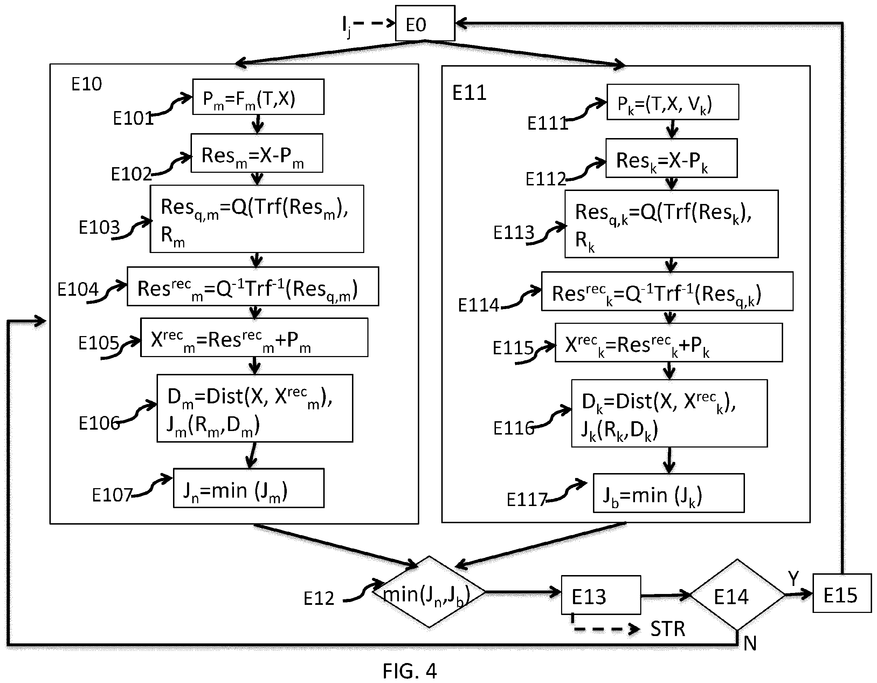

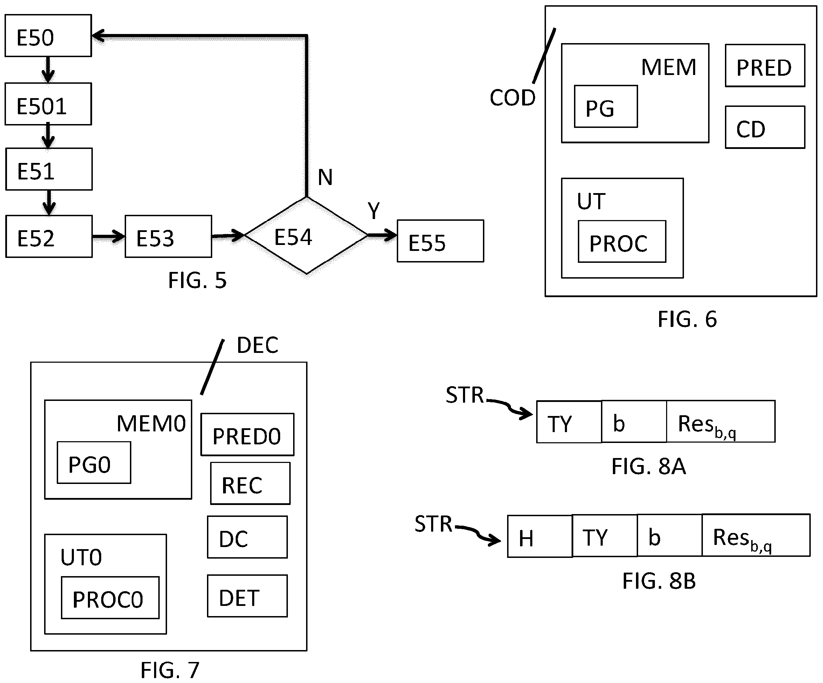

La figure 4 présente des étapes du procédé de codage d'une séquence d'images $I_1$, $I_2$, ..., $I_{Nb}$ à coder sous la forme d'un flux de données codées STR selon un mode particulier de réalisation de l'invention. Par exemple, un tel procédé de codage est mis en œuvre par un dispositif de codage tel que décrit en relation avec la figure 6.

Une séquence d'images $I_1$, $I_2$, ..., $I_{Nb}$, Nb étant le nombre d'images de la séquence à coder, est fournie en entrée du procédé de codage. Le procédé de codage délivre en sortie un flux de données codées STR représentatif de la séquence d'images fournie en entrée.

De manière connue, le codage de la séquence d'images $I_1$, $I_2$, ..., $I_{Nb}$ est fait image par image selon un ordre de codage préalablement établi et connu du décodeur. Par exemple, les images peuvent être codées dans l'ordre temporel $I_1$, $I_2$, ..., $I_{Nb}$ ou selon un autre ordre, par exemple $I_1$, $I_3$, $I_2$, ..., $I_{Nb}$.

Lors d'une étape E0, une image $I_j$ à coder de la séquence d'images $I_1$, $I_2$, ..., $I_{Nb}$ est découpée en blocs, par exemple en blocs de taille 32x32, ou 64x64 pixels ou plus. Un tel bloc peut être subdivisé en sous-blocs carrés ou rectangulaires, par exemple de taille 16x16, 8x8, 4x4, 16x8, 8x16, ....

Puis, lors de l'étape E0, un bloc ou sous-bloc X à coder d'une image $I_j$ ($1 \leq j \leq Nb$) est sélectionné selon un sens de parcours de l'image $I_j$ prédéterminé.

On suppose ici que le bloc X est codé selon un mode de codage Intra. Parmi les modes de codage Intra disponibles, on suppose que le bloc X peut être codé à l'aide d'un mode de codage Intra classique, par exemple selon un mode de codage Intra défini dans le standard HEVC décrit dans "Overview of the High Efficiency Video Coding (HEVC) Standard", G.-J. Sullivan, J.-R. Ohm, W.-J. Han, T. Wiegand, IEEE Transactions on Circuits and Systems for Video Technology, Décembre 2012, ou bien à l'aide d'un mode de codage Intra utilisant une prédiction telle que décrite ci-dessus en relation avec les figures 2 et 3. Le procédé de codage décrit ici s'applique bien entendu à d'autres modes de prédiction Intra disponibles pour coder le bloc courant X et n'est pas limité aux seuls modes de codage Intra décrits dans le standard HEVC.

Selon le mode particulier de réalisation décrit ici, le meilleur mode de codage Intra pour le bloc X sera sélectionné à l'aide de coûts débit/distorsion associés à chaque mode de codage Intra. Lors d'une étape E10, le meilleur mode de codage intra classique pour coder le bloc X est déterminé. La prédiction Intra classique consiste à prédire l'ensemble des pixels X(*lin,col*) du bloc courant par des pixels T(*lin,col*) précédemment reconstruits, où *lin* représente l'indice dans l'image de la ligne du pixel par rapport au coin supérieur gauche du bloc X et *col* représente l'indice dans l'image de la colonne du pixel par rapport au coin supérieur gauche du bloc X, tel qu'illustré en figure 1. Les pixels précédemment reconstruits T(*lin,col*) sont interpolés par une fonction d'interpolation choisie dans un ensemble de fonctions {$F_m$} où m vaut entre 0 et M-1, M étant le nombre de modes Intra: pour chaque pixel X(*lin,col*), la valeur prédite P(*lin,col*) est donnée par P(*lin,col*) = $F_m$(*T, lin,col*), où m est l'indice du mode de prédiction Intra.

Ainsi, selon le standard HEVC, le mode m=1 consiste à affecter à chaque pixel prédit P(*lin,col*) la valeur moyenne des pixels T(*lin,col*) précédemment reconstruits. Les modes d'indice m>1 sont des interpolations directionnelles dans 33 directions différentes à partir des pixels T(*lin,col*) précédemment reconstruits.

Au cours de l'étape E10, la meilleure prédiction possible parmi les modes de prédiction Intra classique m, m=0,M-1, est déterminée.

Pour cela, pour chaque mode de prédiction m allant de 0 à M-1:

- lors d'une sous-étape E101, le bloc prédicteur $P_m$ est construit en appliquant la fonction de prédiction correspondante à chaque pixel du bloc courant X: $P_m$(*lin,col*) = $F_m$(*T, lin, col*),
- lors d'une sous-étape E102, le résidu de prédiction $Res_m$ du bloc courant X pour le mode m est calculé pour chaque pixel du bloc courant X, par $Res_m$(*lin, col*) = X(*lin, col*) - $P_m$(*lin,col*).
- de manière classique, lors d'une sous-étape E103, le résidu de prédiction est transformé, par exemple par une transformée DCT, et quantifié, délivrant des coefficients quantifiés $Res^q_m$, et un coût de codage $R_m$ associé au mode de prédiction Intra m est estimé à partir des coefficients quantifiés $Res^q_m$ et du coût de signalisation du mode de prédiction Intra m,

- lors d'une sous-étape E104, le résidu de prédiction $Res^{rec}_m$ est reconstruit par quantification inverse et transformation inverse des coefficients quantifiés $Res^q_m$,
- lors d'une sous-étape E105, le bloc courant $X^{rec}_m$ est reconstruit par $X^{rec}_m$ = $Res^{rec}_m$ + $P_m$,
- lors d'une sous-étape E106, la distorsion $D_m$ entre le bloc courant X et le bloc courant reconstruit $X^{rec}_m$ associée au mode de prédiction Intra m est calculée: $D_m$ = Dist(X, $X^{rec}_m$), avec Dist représentant une fonction d'erreur, par exemple une fonction d'erreur quadratique, et le coût débit/distorsion associé au mode de prédiction Intra m est calculé: $J_m$ = $R_m$ + λ × $D_m$.

Lors d'une sous-étape E107, le mode de prédiction n fournissant le coût débit/distorsion $J_n$ le plus bas parmi tous les coûts débit/distorsion $J_m$ associés aux modes de prédiction m de 0 à M-1, est sélectionné comme le meilleur mode de prédiction Intra classique. Le mode de prédiction n, les informations codées associées au résidu de prédiction $Res^q_n$ et le bloc courant reconstruit $X^{rec}_m$ sont stockés pour la suite.

Lors d'une étape E11, le coût de codage d'un mode de prédiction Intra tel que décrit en relation avec les figures 2 et 3 est déterminé afin d'être comparé ensuite avec le meilleur mode de prédiction Intra classique. Pour plus de clarté, on nommera le mode de prédiction Intra tel que décrit en relation avec les figures 2 et 3, "un mode avec prédiction corrigée".

Lors de l'étape E11, le bloc de correction $V_b$ fournissant un codage du bloc courant $X$ pour lequel le coût débit/distorsion selon le mode avec prédiction corrigée est le plus bas, est déterminé. Pour cela, pour chaque bloc de correction $V_k$ de l'ensemble de blocs de correction, k allant de 0 à N-1, les sous-étapes suivantes sont mises en œuvre:

- lors d'une sous-étape E111, le bloc prédicteur $P_k$ associé au bloc de correction $V_k$ est construit en mettant en œuvre les étapes 20 à 22 décrites en relation avec la figure 2,
- lors d'une sous-étape E112, le résidu de prédiction $Res_k$ du bloc courant $X$ pour le bloc de correction $V_k$ est calculé pour chaque pixel du bloc courant X, par $Res_k(lin, col) = X(lin, col) - P_k(lin,col)$.
- lors d'une sous-étape E113, le résidu de prédiction est transformé, par exemple par une transformée DCT, et quantifié délivrant des coefficients quantifiés $Res^q_k$, et un coût de codage $R_k$ associé au bloc de correction $V_k$ est estimé à partir des coefficients quantifiés et du coût de signalisation du bloc de correction $V_k$. Par exemple, le bloc de correction $V_k$ est signalé au décodeur par le codage de l'indice du bloc de correction $V_k$ parmi l'ensemble de blocs de correction,
- lors d'une sous-étape E114, le résidu de prédiction $Res^{rec}_k$ est reconstruit par quantification inverse et transformation inverse des coefficients quantifiés $Res^q_k$,
- lors d'une sous-étape E115, le bloc courant $X^{rec}$ est reconstruit par $X^{rec}_k = Res^{rec}_k + P_k$,
- lors d'une sous-étape E116, la distorsion $D_k$ entre le bloc courant $X$ et le bloc courant reconstruit $X^{rec}_k$ associé au bloc de correction $V_k$ est calculée: $D_k = Dist(X, X^{rec}_k)$, avec Dist représentant une fonction d'erreur, par exemple une fonction d'erreur quadratique, et le coût débit/distorsion associé au bloc de correction $V_k$ est calculé: $J_k = R_k + \lambda \times D_k$.

Lors d'une sous-étape E117, le bloc de correction $V_b$ fournissant le coût débit/distorsion $J_b$ le plus bas parmi tous les coûts débit/distorsion $J_k$ associés aux blocs de correction $V_k$ avec k de 0 à N-1, est sélectionné comme le meilleur bloc de correction. L'indice du bloc de correction $V_b$ et les informations codées associées au résidu de prédiction $Res_b$ sont stockés pour la suite.

Lors d'une étape E12, les coûts débit/distorsion $J_n$ et $J_b$ des deux modes de prédiction obtenus respectivement lors de l'étape E10 et lors de l'étape E11, sont comparés, et le bloc courant $X$ est codé selon le mode de prédiction Intra fournissant le coût débit/distorsion le plus bas. Lors de l'étape E12, une information (TY) indiquant le type de mode de prédiction Intra est codée dans le flux de données STR, tel qu'illustré en figures 8A et 8B. Une telle information indique si le bloc courant $X$ est codé selon un mode de prédiction Intra classique, i.e. un mode de prédiction utilisant uniquement des pixels appartenant à des blocs précédemment reconstruits de l'image, ou si le bloc courant $X$ est codé selon un mode avec prédiction corrigée, i.e. un mode de prédiction utilisant au moins un pixel précédemment corrigé du bloc courant X.

S'il est déterminé lors de l'étape E12 que le meilleur mode de prédiction Intra pour coder le bloc courant $X$ est le mode de prédiction Intra classique n, lors d'une étape E13, le mode de prédiction n est codé dans le flux de données codées STR et les coefficients quantifiés $Res^q_n$ obtenus pour ce mode de prédiction n sont codés dans le flux de données codées STR par un module de codage entropique, par exemple un codeur CABAC décrit dans D. Marpe, H. Schwarz, T. Wiegand, « Context-based adaptive binary arithmetic coding in the H.264/AVC video compression standard » IEEE Transactions on Circuits and Systems for Video Technology (Volume:13 , Issue: 7 ), pages 620 - 636, July 2003.

S'il est déterminé lors de l'étape E12 que le meilleur mode de prédiction Intra pour coder le bloc courant $X$ est le mode avec prédiction corrigée utilisant le bloc de correction $V_b$, lors de l'étape E13, une information représentative du bloc de correction $V_b$ est codée dans le flux de données codées STR, par exemple l'indice "b" du bloc de correction $V_b$ dans le dictionnaire de blocs de correction. Un tel indice est par exemple codé par un code à longueur fixe ou variable. Les coefficients quantifiés $Res^q_b$ obtenus lors de l'étape E113 pour le bloc de correction $V_b$ sont ensuite codés dans le flux de données codées STR par un module de codage entropique, par exemple un codeur CABAC. Un exemple de signal résultant du codage du bloc courant $X$ selon le mode avec prédiction corrigée est illustré en figure 8A.

Selon un mode particulier de réalisation de l'invention, une information représentative de la fonction de prédiction locale $H(A_i, B_i, C_i)$ utilisée pour le mode avec prédiction corrigée est codée dans le flux de données codées STR, tel qu'illustré en figure 8B. Selon ce mode particulier de réalisation de l'invention, une telle information peut être codée au niveau image. Ainsi la même fonction de prédiction locale est utilisée pour tous les blocs de l'image lorsqu'ils sont codés selon le mode avec prédiction corrigée. Ou bien, une telle information peut être codée au niveau bloc, ainsi la fonction de prédiction locale peut être adaptée pour chaque bloc, et la fonction de prédiction locale fournissant le meilleur coût débit/distorsion peut être sélectionnée.

Lors d'une étape E14, il est vérifié si tous les blocs de l'image à coder $I_j$ ont été codés. Dans le cas négatif (N), le procédé de codage reprend à l'étape E10 en procédant à la sélection du bloc suivant selon un parcours prédéterminé de l'image à coder.

Dans le cas où tous les blocs de l'image ont été traités, lors d'une étape E15, une image $I_j^{rec}$ est reconstruite

à partir des blocs reconstruits $X^{rec}$ de l'image et sauvegardée dans une liste d'images de référence pour être utilisée ultérieurement comme référence lors du codage des images suivantes de la séquence d'images. Le procédé de codage retourne ensuite à l'étape E0 pour traiter les images suivantes de la séquence d'images selon l'ordre de codage.

5.4 Procédé de décodage

La figure 5 présente des étapes d'un procédé de décodage d'un flux STR de données codées représentatif d'une séquence d'images $I_1$, $I_2$, ..., $I_{Nb}$ à décoder selon un mode particulier de réalisation de l'invention.

Par exemple, le flux de données STR a été généré via le procédé de codage présenté en relation avec la figure 4. Le flux de données STR est fourni en entrée d'un dispositif de décodage DEC, tel que décrit en relation avec la figure 7.

Le procédé de décodage procède au décodage du flux image par image et chaque image est décodée bloc par bloc.

Pour un bloc Xd'une image à reconstruire, lors de l'étape E50, les données du flux de données STR correspondant au bloc $X$ sont décodées par un module de décodage entropique pour fournir d'une part des éléments de syntaxe relatifs au mode de codage du bloc courant $X$ et d'autre part des coefficients de résidus de prédiction $Res^q_b$ du bloc courant X.

Selon un mode particulier de réalisation de l'invention, les éléments de syntaxe décodés comprennent notamment une information (TY) indiquant si le bloc courant $X$ est codé selon un mode de prédiction Intra classique, i.e. un mode de prédiction utilisant uniquement des pixels appartenant à des blocs précédemment reconstruits de l'image, ou si le bloc courant $X$ est codé selon un mode avec prédiction corrigée, i.e. un mode de prédiction utilisant au moins un pixel précédemment corrigé du bloc courant X.

On suppose ici que le bloc courant $X$ est codé selon un mode avec prédiction corrigée.

Les éléments de syntaxe décodés lors de l'étape E50 comprennent également une information "b" représentative d'un bloc de correction $V_b$ appartenant à un dictionnaire de blocs de correction disponibles au niveau du décodeur DEC.

Lors d'une étape E501, le bloc de correction $V_b$ est déterminé à partir de l'information "b" décodée. Le bloc de correction $V_b$ est identifié parmi les blocs de correction du dictionnaire disponibles au niveau du décodeur DEC. Par exemple, de tels blocs de correction sont stockés dans une mémoire du décodeur DEC.

Lors d'une étape E51, les coefficients de résidus de prédiction du bloc $X$ subissent une quantification inverse, puis une transformation inverse pour fournir un résidu de prédiction décodé $Res^q_b{}^{rec}$.

Lors d'une étape E52, un bloc prédicteur $P_b$ associé au bloc de correction $V_b$ est construit en mettant en œuvre les étapes 20 à 22 décrites en relation avec la figure 2.

Selon un mode particulier de réalisation de l'invention, les éléments de syntaxe décodés lors de l'étape E50 comprennent également une information représentative d'une fonction de prédiction locale $H(A_i, B_i, C_i,)$ utilisée pour le mode avec prédiction corrigée. Une telle information peut être décodée au niveau des éléments de syntaxe image ou pour le bloc courant X. Une telle information représentative d'une fonction de prédiction locale $H(A_i, B_i, C_i,)$ peut être un indice d'une fonction parmi une liste de fonctions de prédiction connue du codeur et du décodeur. Selon ce mode particulier de réalisation de l'invention, la fonction de prédiction locale $H(A_i, B_i, C_i,)$ décodée du flux de données codées STR est utilisée par le procédé de détermination d'un bloc prédicteur décrit en relation avec la figure 2 lors de l'étape E52.

Lors d'une étape E53, le bloc courant $X^{rec}$ est reconstruit en ajoutant au bloc prédicteur $P_b$ associé au bloc de correction $V_b$, le résidu de prédiction $Res^q_b{}^{rec}$ associé au bloc courant $X$ qui a été décodé à partir du flux de données codées STR.

Lors d'une étape E54, il est vérifié si tous les blocs de l'image à décoder ont été décodés et reconstruits. Dans le cas négatif (N), le procédé de décodage reprend à l'étape E50 en procédant à la sélection du bloc suivant selon un parcours prédéterminé de l'image à décoder. Dans le cas où tous les blocs de l'image ont été traités (Y), lors d'une étape E55, une image $I_k{}^{rec}$ est reconstruite à partir des blocs reconstruits $X^{rec}$ et sauvegardée dans une liste d'images de référence pour être utilisée ultérieurement comme référence lors du décodage des images suivantes de la séquence d'images.

Les procédés de codage et de décodage décrits précédemment peuvent être intégrés dans des codeurs/décodeurs vidéo standards tels que H.266, HEVC/H.265, AVC/H.264 ou tout type de codeurs/décodeurs vidéo propriétaires. Les procédés de codage et de décodage selon l'invention s'appliquent également à tous types de codeurs/décodeurs d'images fixes et plus généralement de signaux, utilisant un codage prédictif par bloc.

Les procédés de codage et de décodage ont été décrits précédemment dans le cas du codage spatial de bloc (codage intra d'une image). Ces procédés s'appliquent aisément dans le cas d'images codées selon d'autres types de modes de codage, inter par exemple, dans lesquels certains blocs seulement peuvent être codés par prédiction spatiale.

5.5 Dispositif de codage

La figure 6 présente la structure simplifiée d'un dispositif de codage COD adapté pour mettre en œuvre le procédé de codage selon l'un quelconque des modes particuliers de réalisation de l'invention.

Selon un mode particulier de réalisation de l'invention, les étapes du procédé de codage sont mises en œuvre par des instructions de programme d'ordinateur. Pour cela, le dispositif de codage COD a l'architecture classique d'un ordinateur et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en œuvre les étapes du procédé de codage tel que décrit ci-dessus, lorsque le programme est exécuté par le processeur PROC.

A l'initialisation, les instructions de code du programme d'ordinateur PG sont par exemple chargées dans une mémoire RAM avant d'être exécutées par le processeur PROC. Le processeur PROC de l'unité de traitement UT met notamment en œuvre les étapes du procédé de codage décrit ci-dessus, selon les instructions du programme d'ordinateur PG.

Selon un autre mode particulier de réalisation de l'invention, le procédé de codage est mis en œuvre par des modules fonctionnels. Pour cela, le dispositif de codage COD comprend en outre:

- un module de prédiction PRED configuré pour déterminer un bloc prédicteur d'un bloc courant d'une image à coder, le module de prédiction PRED étant également configuré pour:

  - pour au moins un premier pixel du bloc courant:

    - obtenir une valeur de prédiction dudit premier pixel à partir d'au moins un pixel d'un bloc précédemment reconstruit de l'image,
    - corriger le premier pixel en ajoutant à la valeur de prédiction obtenue pour ledit premier pixel, au moins une valeur d'un pixel d'un bloc, dit bloc de correction,

  - pour au moins un pixel courant du bloc courant,

    - obtenir une valeur de prédiction dudit pixel courant à partir d'au moins un pixel précédemment corrigé du bloc courant,
    - corriger ledit pixel courant en ajoutant à la valeur de prédiction obtenue pour le pixel courant, au moins une valeur d'un pixel dudit bloc de correction,

- un module de codage CD adapté pour coder dans le flux de données codées au moins une information représentative dudit bloc de correction et un bloc de résidu calculé à partir dudit bloc courant et dudit bloc prédicteur déterminé.

L'unité de traitement UT est configurée pour calculer le bloc de résidu à partir du bloc courant et du bloc prédicteur déterminé.

L'unité de traitement UT coopère avec les différents modules fonctionnels décrits ci-dessus et la mémoire MEM afin de mettre en œuvre les étapes du procédé de codage.

Les différents modules fonctionnels décrits ci-dessus peuvent être sous forme matérielle et/ou logicielle. Sous une forme logicielle, un tel module fonctionnel peut comprendre un processeur, une mémoire et des instructions de code de programme pour mettre en œuvre la fonction correspondante au module lorsque les instructions de code sont exécutées par le processeur. Sous une forme matérielle, un tel module fonctionnel peut être mis en œuvre par tout type de circuits d'encodage adaptés, tels que par exemple et de manière non limitative des microprocesseurs, des processeurs de traitement du signal (DSP pour Digital Signal Processor en anglais), des circuits intégrés spécifiques à des applications (ASICs pour Application Specific Integrated Circuit en anglais), des circuits FPGA (pour Field Programmable Gate Arrays en anglais), un câblage d'unités logiques...

5.6 Dispositif de décodage

La figure 7 présente la structure simplifiée d'un dispositif de décodage DEC adapté pour mettre en œuvre le procédé de décodage selon l'un quelconque des modes particuliers de réalisation de l'invention.

Selon un mode particulier de réalisation de l'invention, le dispositif de décodage DEC a l'architecture classique d'un ordinateur et comprend notamment une mémoire MEM0, une unité de traitement UT0, équipée par exemple d'un processeur PROC0, et pilotée par le programme d'ordinateur PG0 stocké en mémoire MEM0. Le programme d'ordinateur PG0 comprend des instructions pour mettre en œuvre les étapes du procédé de décodage tel que décrit ci-dessus, lorsque le programme est exécuté par le processeur PROC0.

A l'initialisation, les instructions de code du programme d'ordinateur PG0 sont par exemple chargées dans une mémoire RAM avant d'être exécutées par le processeur PROC0. Le processeur PROC0 de l'unité de traitement UT0 met notamment en œuvre les étapes du procédé de décodage décrit ci-dessus, selon les instructions du programme d'ordinateur PG0. Selon un autre mode particulier de réalisation de l'invention, le procédé de décodage est mis en œuvre par des modules fonctionnels. Pour cela, le dispositif de décodage DEC comprend en outre :

- un module de décodage DC configuré pour, pour au moins un bloc courant d'une image à reconstruire, décoder à partir du flux de données codées, au moins une information représentative d'un bloc, dit bloc de correction, et un bloc de résidu,
- un module de détermination DET configuré pour déterminer le bloc de correction à partir de l'information décodée,
- un module de prédiction PRED0 configuré pour déterminer un bloc prédicteur du bloc courant, le module de prédiction PRED0 étant configuré pour:

  - pour au moins un premier pixel du bloc courant:

    - obtenir une valeur de prédiction dudit premier pixel à partir d'au moins un pixel d'un bloc précédemment reconstruit de l'image,
    - corriger le premier pixel en ajoutant à la valeur de prédiction obtenue pour ledit premier pixel, au moins une valeur d'un pixel du bloc de correction,

  - pour au moins un pixel courant du bloc courant, distinct du premier pixel,

    - obtenir une valeur de prédiction dudit pixel courant à partir d'au moins un pixel précédemment corrigé du bloc courant,

  - corriger ledit pixel courant en ajoutant à la valeur de prédiction obtenue pour le pixel courant, au moins une valeur d'un pixel du bloc de correction,

- un module de reconstruction REC adapté pour reconstruire ledit bloc courant à partir du bloc prédicteur et du bloc de résidu.

L'unité de traitement UT0 coopère avec les différents modules fonctionnels décrits ci-dessus et la mémoire MEM0 afin de mettre en œuvre les étapes du procédé de décodage.

Les différents modules fonctionnels décrits ci-dessus peuvent être sous forme matérielle et/ou logicielle. Sous une forme logicielle, un tel module fonctionnel peut comprendre un processeur, une mémoire et des instructions de code de programme pour mettre en œuvre la fonction correspondante au module lorsque les instructions de code sont exécutées par le processeur. Sous une forme matérielle, un tel module fonctionnel peut être mis en œuvre par tout type de circuits de décodage adaptés, tels que par exemple et de manière non limitative des microprocesseurs, des processeurs de traitement du signal (DSP pour Digital Signal Processor en anglais), des circuits intégrés spécifiques à des applications (ASICs pour Application Specific Integrated Circuit en anglais), des circuits FPGA (pour Field Programmable Gate Arrays en anglais), un câblage d'unités logiques...

## Revendications

1. Procédé de décodage d'un flux de données codées représentatif d'au moins une image, ladite image étant découpée en blocs, le procédé de décodage comprend les étapes suivantes, pour au moins un bloc de l'image, dit bloc courant:

   - décodage (E50) à partir du flux de données codées, d'au moins une information représentative d'un bloc, dit bloc de correction, ledit bloc de correction comprenant des données de résidu, dites valeurs de correction, et d'un bloc de résidu, ledit bloc de résidu comprenant des données de résidu de prédiction,
   - détermination du bloc de correction à partir de l'information décodée représentative dudit bloc de correction,
   - détermination (E52) d'un bloc prédicteur du bloc courant comprenant:

     pour au moins un premier pixel du bloc courant:

       - obtention (E20) d'une valeur de prédiction dudit premier pixel à partir d'au moins un pixel d'un bloc précédemment reconstruit de l'image,
- correction (E21) de la valeur de prédiction obtenue pour ledit premier pixel en lui ajoutant au moins une valeur de correction d'un pixel du bloc de correction,

pour au moins un pixel courant du bloc courant, distinct du premier pixel:

- obtention (E20) d'une valeur de prédiction dudit pixel courant à partir d'au moins une valeur de prédiction précédemment corrigée pour un autre pixel du bloc courant,
- correction (E21) de la valeur de prédiction obtenue pour ledit pixel courant en lui ajoutant au moins une valeur de correction d'un pixel du bloc de correction,

- reconstruction (E53) dudit bloc courant à partir du bloc prédicteur et des données de résidu de prédiction du bloc de résidu décodé.

2. Procédé de codage d'au moins une image sous la forme d'un flux de données codées, ladite image étant découpée en blocs, le procédé de codage comprend les étapes suivantes, pour au moins un bloc de l'image à coder, dit bloc courant:

- détermination (E111) d'un bloc prédicteur du bloc courant comprenant:

- pour au moins un premier pixel du bloc courant:

- obtention (E20) d'une valeur de prédiction dudit premier pixel à partir d'au moins un pixel d'un bloc précédemment reconstruit de l'image,
- correction (E21) de la valeur de prédiction obtenue pour ledit premier pixel en lui ajoutant au moins une valeur d'un pixel d'un bloc, dit bloc de correction, ledit bloc de correction comprenant des données de résidu, dites valeurs de correction,

- pour au moins un pixel courant du bloc courant, distinct du premier pixel:

- obtention (E20) d'une valeur de prédiction dudit pixel courant à partir d'au moins une valeur de prédiction précédemment corrigée pour un autre pixel du bloc courant,

- correction (E21) de la valeur de prédiction obtenue pour ledit pixel courant en lui ajoutant au moins une valeur de correction d'un pixel dudit bloc de correction,

- codage (E13) dans le flux de données d'au moins une information représentative dudit bloc de correction,
- calcul de données de résidu de prédiction d'un bloc de résidu à partir dudit bloc courant et dudit bloc prédicteur déterminé,
- codage dans le flux de données des données de résidu de prédiction dudit bloc de résidu.

3. Procédé selon l'une quelconque des revendications 1 ou 2, dans lequel le bloc de correction comprend des données de résidu prédéterminées.

4. Procédé selon l'une quelconque des revendications 1 à 3, dans lequel le bloc de correction appartient à un ensemble de blocs de données prédéterminés, ladite au moins une information représentative dudit bloc de correction permettant d'identifier ledit bloc de correction parmi les blocs de l'ensemble.

5. Procédé selon l'une quelconque des revendications 1 à 4, dans lequel la valeur de prédiction du pixel courant est obtenue à partir d'au moins un pixel précédemment corrigé du bloc courant en fonction d'une fonction de prédiction locale appliquée sur le pixel situé au-dessus du pixel courant, sur le pixel situé à gauche du pixel courant et sur le pixel situé en haut à gauche du pixel courant.

6. Procédé selon la revendication 5, dans lequel une information représentative de la fonction de prédiction locale est codée dans ou décodée depuis le flux de données codées.

7. Procédé selon l'une quelconque des revendications 1 à 6, dans lequel le flux de données codées comprend, pour le bloc courant, une information indiquant si le bloc courant est codé selon un mode de prédiction utilisant uniquement des pixels appartenant à des blocs précédemment reconstruits de l'image ou si le bloc courant est codé selon un mode de prédiction utilisant au moins un pixel précédemment corrigé du bloc courant.

**8.** Dispositif de décodage (DEC) d'un flux de données codées représentatif d'au moins une image, ladite image étant découpée en blocs, le dispositif de décodage comprend, pour au moins un bloc de l'image, dit bloc courant:

- un module de décodage (DC) adapté pour décoder à partir du flux de données codées, au moins une information représentative d'un bloc, dit bloc de correction, ledit bloc de correction comprenant des données de résidu, dites valeurs de correction, et un bloc de résidu, ledit bloc de résidu comprenant des données de résidu de prédiction,- un module de détermination (DET) adapté pour déterminer le bloc de correction à partir de l'information décodée,
- un module de prédiction (PRED0) adapté pour déterminer, au moins à partir du bloc de correction, un bloc prédicteur du bloc courant, le module de prédiction étant également adapté pour:

- pour au moins un premier pixel du bloc courant:

- obtenir une valeur de prédiction dudit premier pixel à partir d'au moins un pixel d'un bloc précédemment reconstruit de l'image,
- corriger la valeur de prédiction obtenue pour le premier pixel en lui ajoutant au moins une valeur de correction d'un pixel du bloc de correction,

- pour au moins un pixel courant du bloc courant, distinct du premier pixel,

- obtenir une valeur de prédiction dudit pixel courant à partir d'au moins une valeur de prédiction précédemment corrigée pour un autre pixel du bloc courant,

- corriger la valeur de prédiction obtenue pour ledit pixel courant en lui ajoutant au moins une valeur de correction d'un pixel du bloc de correction,

- un module de reconstruction (REC) adapté pour reconstruire ledit bloc courant à partir du bloc prédicteur et des données de résidu de prédiction du bloc de résidu décodé.

**9.** Dispositif de codage (COD) d'au moins une image sous la forme d'un flux de données codées, ladite image étant découpée en blocs, le dispositif de codage comprend, pour au moins un bloc de l'image à coder, dit bloc courant:

- un module de prédiction (PRED) adapté pour déterminer un bloc prédicteur du bloc courant, le module de prédiction étant également adapté pour:

- pour au moins un premier pixel du bloc courant:

- obtenir une valeur de prédiction dudit premier pixel à partir d'au moins un pixel d'un bloc précédemment reconstruit de l'image,
- corriger la valeur de prédiction obtenue pour le premier pixel en lui ajoutant au moins une valeur d'un pixel d'un bloc, dit bloc de correction, ledit bloc de correction comprenant des données de résidu, dites valeurs de correction,

- pour au moins un pixel courant du bloc courant,

- obtenir une valeur de prédiction dudit pixel courant à partir d'au moins une valeur de prédiction précédemment corrigée pour un autre pixel du bloc courant,
- corriger la valeur de prédiction obtenue pour ledit pixel courant en lui ajoutant au moins une valeur de correction d'un pixel dudit bloc de correction,

- un module de codage (CD) adapté pour coder dans le flux de données au moins une information représentative dudit bloc de correction et un bloc de résidu calculé à partir dudit bloc courant et dudit bloc prédicteur déterminé, ledit bloc de résidu comprenant des données de résidu de prédiction.

**10.** Programme d'ordinateur comportant des instructions pour la mise en œuvre du procédé de décodage selon l'une quelconque des revendications 1 ou 3 à 7, lorsque le programme est exécuté par un processeur.

**11.** Programme d'ordinateur comportant des instructions pour la mise en œuvre du procédé de codage selon l'une quelconque des revendications 2 à 7, lorsque le programme est exécuté par un processeur.

**12.** Signal comportant des données codées représentatives d'au moins une image, ladite image étant découpée en blocs, le signal comprend, pour au moins un bloc de l'image, dit bloc courant:

- au moins une information (b) représentative d'un bloc, dit bloc de correction, ledit bloc de correction comprenant des données de résidu, dites valeurs de correction, au moins un premier pixel du bloc courant étant codé à partir d'au moins une valeur de correction d'un pixel du bloc de correction et d'une valeur de prédiction obtenue pour ledit premier pixel à partir d'au moins un pixel d'un bloc précédemment reconstruit de l'image, et au moins un pixel courant du bloc courant étant codé à partir d'au moins une valeur de correction d'un pixel du bloc de correction et d'une valeur de prédiction obtenue pour ledit pixel courant à partir d'au moins une valeur de prédiction précédemment corrigée pour un autre pixel du bloc courant, délivrant un bloc prédicteur pour le bloc courant,
- au moins une information ($Res^q_b$) représentative d'un bloc de résidu, ledit bloc de résidu comprenant des données de résidu de prédiction, calculées à partir du bloc courant et du bloc prédicteur.

**13.** Signal selon la revendication 12, comprenant en outre, pour le bloc courant, une information (TY) indiquant si le bloc courant est codé selon un mode de prédiction utilisant uniquement des pixels appartenant à des blocs précédemment reconstruits de l'image ou si le bloc courant est codé selon un mode de prédiction utilisant au moins un pixel précédemment corrigé du bloc courant.

EP 3 941 045 A1

| | | | T(-1,-1) | T(-1,0) | T(-1,1) | T(-1,2) | T(-1,3) |
| | | | T(0,-1) | X(0,0) | X(0,1) | X(0,2) | X(0,3) |
| | | | T(1,-1) | X(1,0) | X(1,1) | ... | |
| | | | T(2,-1) | | | | |
| | | | T(3,-1) | | | | X(3,3) |

X

FIG. 1

FIG. 2

FIG. 3

FIG. 4

FIG. 5

FIG. 6

FIG. 7

FIG. 8A

FIG. 8B

EP 3 941 045 A1

Europäisches
Patentamt

European
Patent Office

Office européen
des brevets

# RAPPORT DE RECHERCHE EUROPEENNE

Numéro de la demande

**EP 21 19 4860**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2013/067435 A1 (HUAWEI TECH CO LTD [CN]; GAO WEN [US]; JIANG MINQIANG [US]; HE YE [US]) 10 mai 2013 (2013-05-10) * le document en entier * ----- | 1-13 | INV. H04N19/105 H04N19/11 H04N19/176 H04N19/147 |
| X | WO 2013/009896 A1 (HUAWEI TECH CO LTD [CN]; GAO WEN [US]; SONG JIN [CN]; YANG MINGYUAN [C) 17 janvier 2013 (2013-01-17) * le document en entier * ----- | 1,2,8-12 | H04N19/46 H04N19/593 H04N19/94 |
| A | US 2013/322520 A1 (TERADA KENGO [JP] ET AL) 5 décembre 2013 (2013-12-05) * alinéa [0101] - alinéa [0102]; figure 1 * ----- | 1-13 | |
| A | LINDE Y ET AL: "AN ALGORITHM FOR VECTOR QUANTIZER DESIGN", IEEE TRANSACTIONS ON COMMUNICATIONS, IEEE SERVICE CENTER, PISCATAWAY, NJ. USA, vol. COM-28, no. 1, 1 janvier 1980 (1980-01-01), pages 84-95, XP000563284, ISSN: 0090-6778, DOI: 10.1109/TCOM.1980.1094577 * le document en entier * ----- | 1-13 | DOMAINES TECHNIQUES RECHERCHES (IPC) H04N |

Le présent rapport a été établi pour toutes les revendications

| Lieu de la recherche | Date d'achèvement de la recherche | Examinateur |
|---|---|---|
| **Munich** | **9 décembre 2021** | **Schoeyer, Marnix** |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 19 4860

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-12-2021

| Document brevet cité au rapport de recherche | Date de publication | Membre(s) de la famille de brevet(s) | Date de publication |
|---|---|---|---|
| WO 2013067435 A1 | 10-05-2013 | EP 2774360 A1 | 10-09-2014 |
| | | EP 2777258 A1 | 17-09-2014 |
| | | US 2013114693 A1 | 09-05-2013 |
| | | US 2013114716 A1 | 09-05-2013 |
| | | US 2016112720 A1 | 21-04-2016 |
| | | WO 2013067435 A1 | 10-05-2013 |
| | | WO 2013067436 A1 | 10-05-2013 |
| WO 2013009896 A1 | 17-01-2013 | CN 103650496 A | 19-03-2014 |
| | | EP 2705668 A1 | 12-03-2014 |
| | | US 2013016777 A1 | 17-01-2013 |
| | | US 2017048554 A1 | 16-02-2017 |
| | | WO 2013009896 A1 | 17-01-2013 |
| US 2013322520 A1 | 05-12-2013 | AR 091182 A1 | 14-01-2015 |
| | | AU 2013273044 A1 | 23-01-2014 |
| | | BR 112013032418 A2 | 17-01-2017 |
| | | CA 2840064 A1 | 12-12-2013 |
| | | CN 103650498 A | 19-03-2014 |
| | | CN 107820092 A | 20-03-2018 |
| | | EP 2858357 A1 | 08-04-2015 |
| | | JP 6288423 B2 | 07-03-2018 |
| | | JP WO2013183232 A1 | 28-01-2016 |
| | | KR 20150016063 A | 11-02-2015 |
| | | MX 340432 B | 08-07-2016 |
| | | RU 2013157568 A | 27-07-2016 |
| | | SG 10201608534X A | 29-12-2016 |
| | | TW 201412122 A | 16-03-2014 |
| | | US 2013322520 A1 | 05-12-2013 |
| | | US 2016277752 A1 | 22-09-2016 |
| | | US 2018084263 A1 | 22-03-2018 |
| | | US 2019289304 A1 | 19-09-2019 |
| | | WO 2013183232 A1 | 12-12-2013 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MATTHIAS WIEN.** High Efficiency Video Coding, Coding Tools and Spécification. *Signais and Communication Technology,* 2015
- **LINDE, Y. ; BUZO, A. ; GRAY, R.** An Algorithm for Vector Quantizer Design. *IEEE Transactions on Communications,* 1980, vol. 28, 84
- Vector Quantization and Signal Compression. **ALLEN GERSHO ; ROBERT M. GRAY.** The Springer International Series in Engineering and Computer Science Series. Springer, vol. 159

- **G.-J. SULLIVAN ; J.-R. OHM ; W.-J. HAN ; T. WIEGAND.** Overview of the High Efficiency Video Coding (HEVC) Standard. *IEEE Transactions on Circuits and Systems for Video Technology,* Décembre 2012
- **D. MARPE ; H. SCHWARZ ; T. WIEGAND.** Context-based adaptive binary arithmetic coding in the H.264/AVC video compression standard. *IEEE Transactions on Circuits and Systems for Video Technology,* Juillet 2003, vol. 13 (7), 620-636